# EUROPÄISCHE PATENTSCHRIFT

(11) **EP 2 288 795 B1**
(45) Veröffentlichungstag und Bekanntmachung des Hinweises auf die Patenterteilung: **23.05.2012**
(21) Anmeldenummer: 09727904.6
(22) Anmeldetag: 04.02.2009
(51) Int. Cl.: F01N 3/20

(54) **SCR-SYSTEM MIT MEHREREN TANKS**
SCR SYSTEM COMPRISING A PLURALITY OF TANKS
SYSTEME SCR DOTE DE PLUSIEURS RESERVOIRS

(30) Priorität: 02.04.2008 DE 102008000935
(43) Veröffentlichungstag der Anmeldung: 02.03.2011
(73) Patentinhaber: Robert Bosch GmbH, 70442 Stuttgart (DE)
(72) Erfinder: KURRLE, Bernhard, 70439 Stuttgart (DE); STRAUCH, Armin, 71701 Schwieberdingen (DE); STAMMSEN, Guido, 70372 Stuttgart (DE); KLENK, Wolfgang, 74369 Loechgau (DE); POETTKER, Sven, 71229 Leonberg-Silberberg (DE)
(86) Internationale Anmeldenummer: PCT/EP2009/051226
(87) Internationale Veröffentlichungsnummer: WO 2009/121649

(56) Entgegenhaltungen:
- EP-A- 0 928 884
- WO-A-2006/118868
- WO-A-2008/058977
- WO-A-2008/080691

## Beschreibung

### Stand der Technik

Es sind sogenannte SCR-Systeme bekannt, bei denen ein flüssiges Reduktionsmittel bei Bedarf in den Abgasstrang einer Brennkraftmaschine eingedüst wird, um die katalytische Reduktion von Stickoxiden in einem SCR-Katalysator zu ermöglichen. Eine Ausführungsform dieser SCR-Systeme umfasst gemäß DE 10 2006 06 1732 oder EP 928 884 einen ersten Tank und einen Vorratstank.

Von dem ersten Tank wird das flüssige Reduktionsmittel angesaugt, die anschließend in den Abgasstrang eingedüst werden soll. Da dieser erste Tank aus Platzgründen ggf. kein ausreichend großes Volumen hat, ist an einem anderen Ort im Kraftfahrzeug mindestens ein weiterer Vorratstank angeordnet. Bei Bedarf wird der erste Tank aus dem mindestens einen Vorratstank mit einem flüssigen Reduktionsmittel wieder befüllt, so dass immer ein ausreichender Füllstand in dem ersten Tank gewährleistet ist. Dadurch, dass mehrere Tanks vorhanden sind, ist es möglich so viel flüssiges Reduktionsmittel im Kraftfahrzeug zu bevorraten, dass lediglich bei einem Ölwechsel beziehungsweise einem Inspektionsintervall des Kraftfahrzeugs ein erneutes Betanken mit einem flüssigen Reduktionsmittel erforderlich ist. Infolgedessen muss sich der Fahrer eines Kraftfahrzeugs nicht um das Nachtanken des flüssigen Reduktionsmittels kümmern. Im Zusammenhang mit der Erfindung wird stets von flüssigem Reduktionsmittel gesprochen. Ein bewährtes Reduktionsmittel ist eine Harnstoff-Wasser-Lösung. Allerdings ist die Erfindung nicht auf dieses Reduktionsmittel beschränkt.

Bei den genannten Mehr-Tank-SCR-Systemen ist eine Förderpumpe vorgesehen, die flüssiges Reduktionsmittel aus dem ersten Tank über eine Förderleitung in den Abgasstrang eindüst. Eine zweite Pumpe, die auch als Umpumpeinheit (UPE) bezeichnet wird, ist vorgesehen, um flüssiges Reduktionsmittel aus dem Vorratstank in den ersten Tank zu fördern. Um sicherzustellen, dass nicht unrewollterweise der erste Tank mit zu viel flüssigem Reduktionsmittel befüllt wird, wenn die UPE nicht angesteuert wird und nicht fördern soll, kann in einer Weiterentwicklung der aus dem Stand der Technik bekannten SCR-Syteme zwischen dem Vorratstank und dem ersten Tank ggf. noch zusätzlich ein Sperrventil zur Verhinderung eines Leckagestromes vorgesehen werden.

### Offenbarung der Erfindung

Der Erfindung liegt die Aufgabe zugrunde, SCR-Zwei-Tank-Systeme dahingehend zu verbessern, dass die Komplexität des Systems verringert, die Herstellungskosten reduziert und außerdem die Funktionalität weiter verbessert wird. Insbesondere ist auch gewünscht, dass die Anforderungen an die Gefrierfesfigkeit des Systems reduziert werden können.

Diese Aufgabe wird erfindungsgemäß bei einer Einspritzeinrichtung für ein flüssiges Reduktionsmittel mit einem Fördermodul, umfassend eine Pumpe, eine Förderleitung und eine Saugleitung, mit einem ersten Tank und mit mindestens einem Vorratstank, wobei der erste Tank mit dem in dem mindestens ein Vorratstank befindlichen flüssigen Reduktionsmittel befüllbar ist, dadurch gelöst, dass die Pumpe wahlweise ein flüssiges Reduktionsmittel aus dem ersten Tank oder dem mindestens einen Vorratstank fördert.

Dadurch ist es möglich, mit einer Pumpe sowohl das Fördern von einem flüssigen Reduktionsmittel aus dem ersten Tank in den Abgasstrang als auch das Fördern von einem flüssigen Reduktionsmittel aus dem mindestens einen Vorratstank vorzunehmen. Im Ergebnis wird dadurch eine Förderpumpe eingespart, was sich positiv auf die Komplexität des Systems und die Herstellungskosten auswirkt.

In weiterer vorteilhafter Ausgestaltung der Erfindung ist in der Saugleitung ein Wegeventil vorgesehen, wobei das Wegeventil in einer ersten Schaltstellung die Saugleitung mit dem ersten Tank verbindet und das Wegeventil in einer zweiten Schaltstellung die Saugleitung mit dem mindestens einen Vorratstank verbindet.

Besonders vorteilhaft an dieser Ausgestaltung der erfindungsgemäßen Einrichtung ist, dass in der ersten Schaltstellung des Wegeventils gleichzeitig die hydraulische Verbindung zu dem Vorratstank gesperrt ist, so dass auch auf ein gesondertes Sperrventil verzichtet werden kann. Wegen der Sperrwirkung des erfindungsgemäßen Wegeventils wird zuverlässig verhindert, dass ungewollterweise ein flüssiges Reduktionsmittel aus dem Vorratstank in den ersten Tank strömen kann.

Nach der Erfindung mündet die Förderleitung in einen Injektor für ein flüssiges Reduktionsmittel, wobei in der Förderleitung zwischen Pumpe und Injektor ein schaltbares Dosierventil angeordnet ist. Mit Hilfe des schaltbaren Dosierventils ist es möglich, zu von der Motorsteuerung vorgegebenen Zeitpunkten eine definierte Menge von flüssigem Reduktionsmittel in den Abgasstrang einzudüsen, so dass am SCR-Katalysator stets eine ausreichend große Konzentration von Reduktionsmittel vorhanden ist, um die im Abgas enthaltenen Stickoxide zu reduzieren.

In der Erfindung ist zwischen Pumpe und dem schaltbaren Dosierventil eine Rückleitung angeordnet, die in den ersten Tank mündet. Durch diese Rückleitung ist es möglich, das überschüssige flüssige Reduktionsmittel, das nicht über das Dosierventil in den Abgasstrang eingedüst wird, zurückzuführen und dadurch die Druckhaltung beziehungsweise Druckregelung zu erleichtern beziehungsweise überhaupt erst zu ermöglichen.

Diese Druckregelung beziehungsweise Druckhaltung wird weiter verbessert und erleichtert, wenn in der Rückleitung eine Druckhalteeinrichtung, insbesondere eine Drossel oder ein Druckregelventil, vorgesehen ist.

Ein weiterer Vorteil dieser Rückleitung ist auch, dass über diese Rückleitung der erste Tank mit flüssigem Reduktionsmittel aus dem Vorratstank gefüllt werden kann, wenn sich das Wegeventil in seiner zweiten Schaltstellung befindet.

Um ein Entlüften der zwischen der Saugleitung und dem Dosierventil zu ermöglichen, ist in weiterer vorteilhafter Ausgestaltung der erfindungsgemäßen Einrichtung ein 4/2-Wegeventil vorgesehen, welches in seiner ersten Schaltstellung einen ersten Abschnitt der Saugleitung mit einem zweiten Abschnitt der Saugleitung und einen ersten Abschnitt der Förderleitung mit einem zweiten Abschnitt der Förderleitung verbindet, und welches in seiner zweiten Schaltstellung den ersten Abschnitt der Saugleitung mit dem ersten Abschnitt der Förderleitung und den zweiten Abschnitt der Förderleitung mit dem zweiten Abschnitt der Saugleitung verbindet. Dadurch ist es möglich, die Verbindungsleitung in Richtung Vorratstank zu entlüften, so dass diese Leitung nicht gefrierfest ausgelegt werden muss.

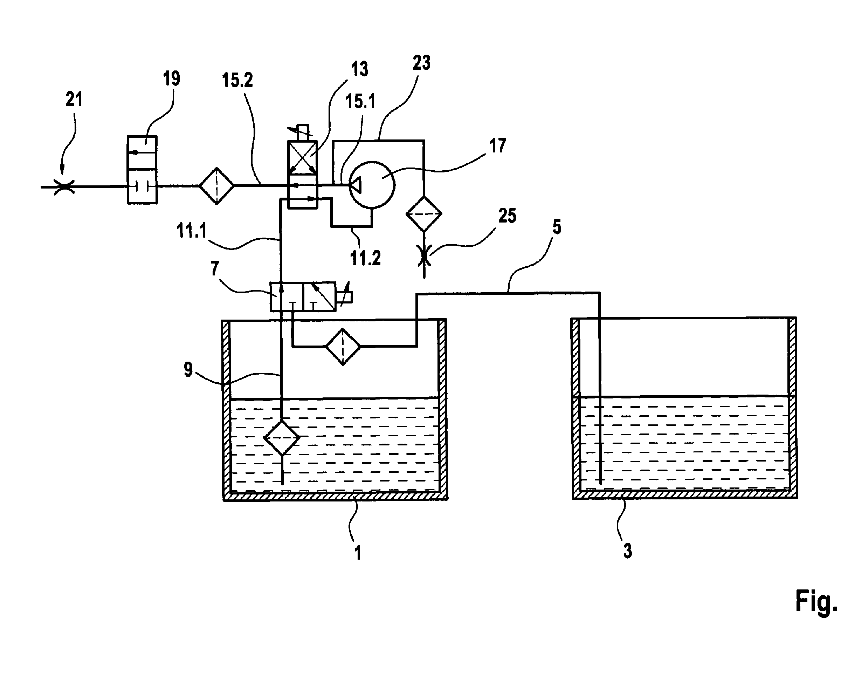

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen beschriebenen Merkmale können sowohl einzeln als auch in beliebiger Kombination miteinander erfindungswesentlich sein.

Die einzige Zeichnung stellt ein Ausführungsbeispiel der erfindungsgemäßen Einspritzeinrichtung dar.

Das erfindungsgemäße System umfasst einen ersten Tank 1 sowie mindestens einen weiteren Vorratstank 3. Zwischen dem Vorratstank und dem ersten Tank 1 ist eine Verbindungsleitung 5 vorgesehen. Die Verbindungsleitung 5 endet an einem Eingang eines 3/2-Wegeventils 7.

Eine Versorgungsleitung 9 verbindet den ersten Tank 1 mit einem zweiten Eingang des 3/2-Wegeventils 7. An dem einzigen Ausgang des 3/2-Wegeventils 7 ist ein erster Abschnitt 11.1 einer Saugleitung angeschlossen. Die Saugleitung 11 wird durch ein 4/2-Wegeventil 13 in einen ersten Abschnitt 11.1 und einen zweiten Abschnitt 11.2 unterteilt. Entsprechendes gilt für eine Förderleitung 15, die von dem 4/2-Wegeventil 13 in einen ersten Abschnitt 15.1 und einen zweiten Abschnitt 15.2 unterteilt wird. Zwischen der Saugleitung 11 und der Förderleitung 15 ist eine Pumpe 17 vorgesehen.

Stromabwärts des 4/2-Wegeventils 13 ist ein Dosierventil 19 in der Förderleitung 15 vorhanden. Das schaltbare Dosierventil 19 ist Teil eines Injektor 21, der ansonsten durch das Symbol einer Drossel charakterisiert wird, vorgesehen. Mit Hilfe des Injektors wird die von der Förderpumpe 17 aus dem ersten Tank 1 oder dem Vorratstank 3 geförderte Harnstoff-Wasser-Lösung in den Abgasstrang (nicht dargestellt) einer Brennkraftmaschine bei Bedarf eingedüst.

Sowohl in der Verbindungsleitung 5, der Versorgungsleitung 9 und der Förderleitung 15 können Filter (ohne Bezugszeichen) vorgesehen sein.

Von der Förderleitung 15 zweigt eine Rückleitung 23 ab, die bevorzugt mit einer Druckhalteeinrichtung, hier in Form einer Drossel 25, versehen ist. Die Rückleitung 23 mündet in den ersten Tank 1.

Die erfindungsgemäße Einrichtung arbeitet wie folgt:

Im Normalbetrieb haben sowohl das 3/2-Wegeventil 7 als auch das 4/2-Wegeventil 13 die in der einzigen Figur dargestellten ersten Schaltstellungen.

Dies bedeutet im Bezug auf das 4/2-Wegeventil 13, dass der erste Abschnitt 11.1 der Saugleitung mit dem zweiten Abschnitt 11.2 der Saugleitung 11 verbunden wird. Entsprechendes gilt für den ersten Abschnitt 15.1. der Förderleitung und den zweiten Abschnitt 15.1 der Förderleitung.

In der einzigen Figur dargestellten ersten Schaltstellung des 3/2-Wege-Ventils 7 ist die Saugleitung 11 mit der Versorgungsleitung 9, die im ersten Tank 9 mündet, verbunden. Gleichzeitig wird die Verbindungsleitung 5 durch das 3/2-Wegeventil 7 gesperrt. Infolgedessen kann nicht unbeabsichtigterweise Harnstoff-Wasser-Lösung aus dem Vorratstank 3 in den ersten Tank 1 gelangen.

Um in der Förderleitung 15 einen vorgegebenen Druck aufrechtzuerhalten, wird die Förderpumpe 7 zumindest zeitweise betrieben, wenn das Dosierventil 19 geschlossen ist und infolgedessen keine Harnstoff-Wasser-Lösung in den Abgasstrang eingedüst wird.

Infolgedessen gelangt der von der Förderpumpe 17 geförderte Fluidstrom über die Rückleitung 23 wieder in den ersten Tank zurück. Aufgrund der als Drossel 25 ausgebildeten Druckhalteeinrichtung in der Rückleitung 23 wird dadurch ein vorgegebener Druck in der Förderleitung 15 aufgebaut beziehungsweise aufrechterhalten.

Wenn nun das Steuergerät der Brennkraftmaschine (nicht dargestellt) ermittelt hat, dass Harnstoff-Wasser-Lösung in den Abgasstrang eingedüst werden soll, wird bei laufender Förderpumpe 17 das Dosierventil von der in der Figur gezeigten Sperrstellung in die Durchflussstellung umgeschaltet. Infolgedessen wird Harnstoff-Wasser-Lösung in den Abgasstrang eingedüst. Sobald die vorgegebene Menge eingedüst wurde, wird das Dosierventil 19 so angesteuert, dass es wieder die Sperrstellung annimmt.

Jedes Mal, wenn Harnstoff-Wasser-Lösung in den Abgasstrang eingedüst wird, und das 3/2-Wegeventil 7 in der in der Figur dargestellten ersten Schaltstellung ist, nimmt naturgemäß der Inhalt des ersten Tanks 1 ab. Um eine vollständige Entleerung des ersten Tanks 1 zu verhindern, wird eine dem Verbrauch von Harnstoff-Wasser-Lösung entsprechende Menge von Harnstoff-Wasser-Lösung aus dem Vorratstank 3 in den ersten Tank 1 umgepumpt. Dies erfolgt erfindungsgemäß dadurch, dass das 3/2-Wegeventil 7 in die zweite Schaltstellung (nicht dargestellt) umgeschaltet wird. Infolgedessen ist die Versorgungsleitung 9 gesperrt und die Förderpumpe 17 saugt Harnstoff-Wasser-Lösung über die Verbindungsleitung 5 aus dem Vorratstank 3 an. Wenn nun in diesem Betriebszustand das Dosierventil 19 geöffnet wird, wird also Harnstoff-Wasser-Lösung direkt aus dem Vorratstank 3 in den Abgasstrang eingedüst, und zusätzlich wird über die Rückleitung 23 und die Drossel 25 der Tank 1 befüllt Sobald das Dosierventil 19 wieder in die Sperrstellung geschaltet wird, fördert die Förderpumpe 17 über die Rückleitung 23 Harnstoff-Wasser-Lösung aus dem Vorratstank 3 in den ersten Tank 1 und befüllt diesen dadurch wieder.

Mit dem erfindungsgemäßen 3/2-Wegeventil 7 ist es also möglich, mit einer Förderpumpe 17 sowohl das Eindüsen von Harnstoff-Wasser-Lösung in den Abgasstrang aus dem ersten Tank 1 als auch dem Vorratstank 3 zu bewerkstelligen und auch den ersten Tank 1 mit Harnstoff-Wasser-Lösung aus dem Vorratstank 3 wieder aufzufüllen. Selbstverständlich ist es auch möglich, mehrere Vorratstanks 3 vorzusehen und das Auffüllen des ersten Tanks 1 der Reihe nach aus den verschiedenen Vorratstanks 3 vorzunehmen.

Wenn zum Beispiel bei einer Ausführungsform der erfindungsgemäßen Einspritzeinrichtung, die in der Figur nicht dargestellt ist, zwei Vorratstanks 3 vorhanden wären, müsste das Wegeventil 7 nicht als 3/2-Wegeventil, sondern als 4/3-Wegeventil mit drei Eingängen und einem Ausgang sowie drei Schaltstellungen ausgebildet sein. Entsprechendes gilt für Systeme mit mehr als zwei Vorratstanks 3.

Um die Förderleitung 15, die Saugleitung und die Verbindungsleitung 5 entleeren zu können, wird das 4/2-Wegeventil 13 bei abgestellter Brennkraftmaschine in die zweite Schaltstellung gebracht und gleichzeitig das Dosierventil 19 in die Durchflussstellung gebracht. Dadurch saugt die Förderpumpe 17 über den zweiten Abschnitt der Förderleitung 15.2 und den zweiten Abschnitt der Saugleitung 11.2 Luft aus dem Abgasstrang der Brennkraftmaschine an und fördert diese über den ersten Abschnitt der Druckleitung 15.1 und den ersten Abschnitt der Saugleitung 11.1 in die Verbindungsleitung 5. Dies setzt auch voraus, dass das 3/2-Wegeventil 7 in die zweite Schaltstellung gebracht wird.

Durch diese Maßnahme ist es möglich, die mit Ausnahme der Versorgungsleitung 9 alle Leitungen des Systems inklusive des 4/2-Wege-Ventils 13 und des 3/2-Wege-Ventils 7 zu entleeren beziehungsweise mit Luft zu füllen, so dass diese Leitungen und die betroffenen Komponenten nicht gefrierfest ausgeführt werden müssen. Durch Schalten des 3/2-WegeVentils 7 während des Entleervorgangs kann auch die Versorgungsleitung 9 entleert werden. Dadurch ergibt sich eine erhebliche Kostenersparnis und gleichzeitig wird die Gefahr von Schäden deutlich reduziert. Wenn die Brennkraftmaschine wieder in Betrieb genommen wird, sind naturgemäß die genannten Leitungen mit Luft gefüllt, so dass eine gewisse Zeit vergeht, bis die Förderpumpe 17 die Saugleitung 11 und einen Teil der Förderleitung 15 mit Harnstoff-Wasser-Lösung gefüllt hat.

Da bei geschlossenem Dosierventil 19 keine Harnstoff-Wasser-Lösung in den zweiten Abschnitt 15.2. der Förderleitung gefördert wird, wird unmittelbar nach dem Öffnen des

Dosierventils 19 zunächst etwas Luft in den Abgasstrang eingeblasen und erst anschließend Harnstoff-Wasser-Lösung eingedüst. Dieses "Luftvolumen" ist bei der Ermittlung der Ansteuerdauer des Dosierventils 19 beim ersten Eindüsen von Harnstoff-Wasser-Lösung nach einer Entleerung der Leitungen und der anschließenden WiederInbetriebnahme der Brennkraftmaschine durch das Steuergerät entsprechend zu berücksichtigen.

Die Ventile 7, 13 und 19 können sowohl elektrisch als auch hydraulisch angesteuert werden.

Wenn das 3/2-Wegeventil 7 hydraulisch angesteuert wird, ist die Förderleitung 15 mit dem hydraulischen Schaltkreis des 3/2-Wegeventils 7 zu verbinden. Optional ist es möglich, das 3/2-Wegeventil 7 im Deckel eines Heiztopfes (nicht dargestellt) unterzubringen. Alternativ ist es auch möglich, das 3-Wegeventil 7 zusammen mit der Förderpumpe 17 auf einer Adapterplatte zu installieren beziehungsweise in diese zu integrieren.

## Patentansprüche

1. Einspritzeinrichtung für Harnstoff-Wasser-Lösung mit einem Fördermodul, umfassend eine Pumpe (17), eine Förderleitung (15) und eine Saugleitung (11), mit einem ersten Tank (1) und mindestens einem Vorratstank (3), wobei der erste Tank (1) mit dem im dem mindestens einen Vorratstank (3) befindlichen flüssigen Reduktionsmittel (HWL) befüllbar ist, **dadurch gekennzeichnet, dass** die Pumpe (17) wahlweise flüssiges Reduktionsmittel aus dem ersten Tank (1) oder dem mindestens einen Vorratstank (3) fördert, wobei die Förderleitung (15) in einem Injektor (21) für flüssige Reduktionsmittel mündet, wobei in der Förderleitung (15) zwischen Pumpe (17) und Injektor (21) ein schaltbares Dosierventil (19) angeordnet ist, und wobei in der Förderleitung (15) zwischen Pumpe (17) und dem schaltbaren Dosierventil (19) eine Rückleitung (23) angeordnet ist, und wobei die Rückleitung (23) in den ersten Tank (1) mündet.

2. Einspritzeinrichtung nach Anspruch 1, **dadurch gekennzeichnet, dass** in der Saugleitung (11) ein Wegeventil (7), vorgesehen ist, dass in einer ersten Schaltstellung des Wegeventils (7) die Saugleitung (11) mit dem ersten Tank (1) verbunden ist, und dass in einer zweiten Schaltstellung des Wegeventils (7) die Saugleitung (11) mit dem mindestens einen Vorratstank (3) verbunden ist.

3. Einspritzeinrichtung nach Anspruch 1 oder 2, **dadurch gekennzeichnet, dass** in der Rückleitung (23) eine Druckhalteeinrichtung, insbesondere eine Drossel (25) oder ein Druckregelventil, vorgesehen ist.

4. Einspritzeinrichtung nach einem der vorhergehenden Ansprüche, **dadurch gekennzeichnet, dass** ein 4/2-Wegeventil (13) vorgesehen ist, welches in seiner ersten Schaltstellung einen ersten Abschnitt (11.1) der Saugleitung (11) mit einem zweiten Abschnitt (11.2) der Saugleitung (11) und einen ersten Abschnitt (15.1) der Förderleitung (15) mit einem zweiten Abschnitt (15.2) der Förderleitung (15) verbindet, und welches in seiner zweiten Schaltstellung den ersten Abschnitt (11.1) der Saugleitung (11) mit dem ersten Abschnitt (15.1) der Förderleitung (15) und den zweiten Abschnitt (15.2) der Förderleitung (15) mit dem zweiten Abschnitt (11.2) der Saugleitung (11) verbindet.

## Claims

1. Injection device for urea/water solution having a conveying module, comprising a pump (17), a conveying line (15) and a suction line (11), having a first tank (1) and at least one reservoir tank (3), it being possible for the first tank (1) to be filled with the liquid reducing agent (HWL) which is situated in the at least one reservoir tank (3), **characterized in that** the pump (17) optionally conveys liquid reducing agent out of the first tank (1) or the at least one reservoir tank (3), the conveying line (15) opening into an injector (21) for liquid reducing agent, a switchable metering valve (19) being arranged in the conveying line (15) between the pump (17) and the injector (21), and a return line (23) being arranged in the conveying line (15) between the pump (17) and the switchable metering valve (19), and the return line (23) opening into the first tank (1).

2. Injection device according to Claim 1, **characterized in that** a directional valve (7) is provided in the suction line (11), **in that** the suction line (11) is connected to the first tank (1) in a first switching position of the directional valve (7), and **in that** the suction line (11) is connected to the at least one reservoir tank (3) in a second switching position of the directional valve (7).

3. Injection device according to Claim 1 or 2, **characterized in that** a pressure-holding device, in particular a restrictor (25) or a pressure control valve, is provided in the return line (23).

4. Injection device according to one of the preceding claims, **characterized in that** a 4/2-way valve (13) is provided which, in its first switching position, connects a first section (11.1) of the suction line (11) to a second section (11.2) of the suction line (11) and connects a first section (15.1) of the conveying line (15) to a second section (15.2) of the conveying line (15), and which, in its second switching position, connects the first section (11.1) of the suction line (11) to the first section (15.1) of the conveying line (15) and connects the second section (15.2) of the conveying line (15) to the second section (11.2) of the suction line (11).

## Revendications

1. Dispositif d'injection pour une solution aqueuse d'urée avec un module de transport comprenant une pompe (17), une conduite de transport (15) et une conduite d'aspiration (11), avec un premier réservoir (1) et au moins un réservoir de réserve (3), le premier réservoir (1) pouvant être rempli avec l'agent réducteur (HWL) fluide se trouvant dans l'au moins un réservoir de réserve (3), **caractérisé en ce que** la pompe (17) refoule de manière sélective de l'agent réducteur fluide hors du premier réservoir (1) ou de l'au moins un réservoir de réserve (3), la conduite de transport (15) débouchant dans un injecteur (21) pour agent réducteur fluide, une soupape de dosage (19) étant disposée dans la conduite de transport (15) entre la pompe (17) et l'injecteur (21), et une conduite de retour (23) étant disposée dans la conduite de transport (15) entre la pompe (17) et la soupape de dosage commutable (19), la conduite de retour (23) débouchant dans le premier réservoir (1).

2. Dispositif d'injection selon la revendication 1, **caractérisé en ce qu'**une soupape de distribution (7) est prévue dans la conduite d'aspiration (11), **en ce que** dans une première position de commutation de la soupape de distribution (7), la conduite d'aspiration (11) est connectée au premier réservoir (1), et **en ce que** dans une deuxième position de commutation de la soupape de distribution (7), la conduite d'aspiration (11) est connectée à l'au moins un réservoir de réserve (3).

3. Dispositif d'injection selon la revendication 1 ou 2, **caractérisé en ce qu'**un dispositif de maintien de la pression, notamment un étranglement (25) ou une soupape de régulation de la pression, est prévu dans la conduite de retour (23).

4. Dispositif d'injection selon l'une quelconque des revendications précédentes, **caractérisé en ce qu'**une soupape à 4/2 voies (13) est prévue, laquelle relie dans sa première position de commutation une première portion (11.1) de la conduite d'aspiration (11) à une deuxième portion (11.2) de la conduite d'aspiration (11) et une première portion (15.1) de la conduite de transport (15) à une deuxième portion (15.2) de la conduite de transport (15), et, dans sa deuxième position de commutation, relie la première portion (11.1) de la conduite d'aspiration (11) à la première portion (15.1) de la conduite de transport (15) et la deuxième portion (15.2) de la conduite de transport (15) à la deuxième portion (11.2) de la conduite d'aspiration (11).
